(19) Europäisches Patentamt
European Patent Office
Office européen des brevets

(11) Veröffentlichungsnummer : **0 386 630 B1**

(12) # EUROPÄISCHE PATENTSCHRIFT

(45) Veröffentlichungstag der Patentschrift : **12.05.93 Patentblatt 93/19**

(51) Int. Cl.$^5$ : **C08L 27/16,** C08L 51/00

(21) Anmeldenummer : **90103995.8**

(22) Anmeldetag : **01.03.90**

(54) **Thermoplastisch verarbeitbare lösungsmittelbeständige Kunststoffmischungen.**

Die Akte enthält technische Angaben, die nach dem Eingang der Anmeldung eingereicht wurden und die nicht in dieser Patentschrift enthalten sind.

(30) Priorität : **04.03.89 DE 3907019**

(43) Veröffentlichungstag der Anmeldung : **12.09.90 Patentblatt 90/37**

(45) Bekanntmachung des Hinweises auf die Patenterteilung : **12.05.93 Patentblatt 93/19**

(84) Benannte Vertragsstaaten : **AT BE CH DE DK ES FR GB IT LI NL SE**

(56) Entgegenhaltungen : **PATENT ABSTRACTS OF JAPAN, Band 7, Nr. 201 (C-184)[1346], 6. September 1983**

(73) Patentinhaber : **RÖHM GMBH**
**Kirschenallee**
**W-6100 Darmstadt (DE)**

(72) Erfinder : **Siol, Werner, Dr.**
**Goerdelerweg 34**
**W-6100 Darmstadt-Eberstadt (DE)**
Erfinder : **Süfke, Thomas, Dr.**
**An der Fuchsenshütte 27**
**W-6101 Rossdorf (DE)**
Erfinder : **Terbrack, Ulrich**
**Berliner Strasse 3**
**W-6107 Reinheim 2 (DE)**
Erfinder : **Müller, Reiner**
**Schillerstrasse 12**
**W-6083 Biebesheim (DE)**

**EP 0 386 630 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gebiet der Erfindung

Die Erfindung betrifft thermoplastisch verarbeitbare, lösungsmittelbeständige Kunststoffmischungen, bestehend aus Mischungen von Polymethyl-, ethyl-, propylacrylat bzw. Polyvinylacetat, Polyvinylpropionat, gepfropft auf ein chemisch vernetztes Elastomeres mit einer Glastemperatur < 0 Grad C einerseits und Polyvinylidenfluorid andererseits.

Stand der Technik

Die Verträglichkeit von Polymethylmethacrylat sowie Polyethylmethacrylat mit Polyvinylidenfluorid (PVDF) in Mischungen ist seit längerer Zeit bekannt. (Vgl. S. Noland et.al. Polym. Prepr. Amer. Chem. Soc., Div. Polym. Chem. 11, 355 (1970); US-A 3 253 060).
Solche Mischungen erfüllen das Kriterium einer einzigen Glastemperatur Tg zwischen der der Polymerkomponenten und sie zeigen auch völlige Transparenz über einen weiten Mischungsbereich hinweg.

Daneben wurde Verträglichkeit von Polyvinylidenfluorid (PVDF) mit einer ganzen Reihe verschiedener Polyvinylverbindungen gefunden. So wurden von D.R. Paul et al. Mischungen des PVDF mit Polymethylacrylat, Polyethylacrylat, Polymethylmethacrylat, Polyethylmethacrylat, Polyvinylacetat und Polyvinylmethylketon beschrieben. (D.R.Paul et al. Polymer Engineering and Science, 18, No. 16, 1225 - 1234 (1978)). Verträgliche Mischungen von Polymethylmethacrylat mit Copolymeren aus Vinylidenfluorid und Hexafluoraceton werden von S. Miyata et al. und Maeda et al. beschrieben. (S. Miyata et al., Polym. Propr. Jpn. 34, 1074 (1985) und Maeda et al. US-P 4 617 350 (1986)). Die Mischbarkeit von Polyvinylidenfluorid-Hexafluoraceton-Copolymeren und Ethylenvinylacetat-Copolymeren wird von Hasegawa beschrieben (Masatoshi Hasegawa and Saburo Akiyama, Polymer Journal, 20, 471 - 476 (1988).

Das Kristallisationsverhalten von PVDF-PMMA-Blends wird von verschiedenen Autoren beschrieben (Wendorff et al. Makromol. Chem., Rapid Commun. 7, 591 - 597 (1986), B.R.Hahn et al., Polymer 28, 201 - 208 (1987) sowie J.L.Halary et al. Macromolecules 21, 2988-29994 (1988)).

Empirisch wurde gefunden, daß die Kristallisiationsneigung von PVDF bei Zusatz von PMMA deutlich abnimmt [T. Nishi, T.T.Wang Macromolecules 8, 909 (1975)]. Man geht anschaulich davon aus, daß sich das kristalline PVDF in der amorphen Polymethacrylat-Schmelze löst und daß das nunmehr amorphe PVDF als Weichmacher für die glasartigen Polymethacrylate wirkt (vgl. S. Noland et al. in N.A. Platzer, Multicomponent Polymer Systems, Advances in Chemistry Series 99, American Chemical Society 1971).

So kann man PVDF in kleineren Anteilen dem Polymethylmethacrylat (PMMA) als polymeren Weichmacher zusetzen (vgl. US-A 3 458 391), während umgekehrt dem PVDF in geringen Mengen PMMA als Verarbeitungshilfsmittel beigefügt werden kann (US-A 3 253 060). Allerdings zeigt die Erfahrung, daß eine eindeutige Eigenschaftsverbesserung des PMMA durch Zusatz von ca. 2 - 20 Gew.-% PVDF zu PMMA nicht erreicht wird.

Aus Patent Abstracts of Japan, Band 7, Nr 201(C184) (1346) bzw. JP-A-5898352 sind thermoplastische Kunstoffzusammensetzungen mit Kern-Schale-Charakter bekannt. In markantem Gegensatz zur lehre der voliegenden Erfindung handelt es sich bei der auf polymerisierten Schale, bei der Alkylmethacrylate mit bis zu 4 Kohlenstoffatomen im Alkylrest polymerisiert werden, um eine "harte" Schale. Im Gegensatz dazu stellen die erfindungsgemäss zur Anwendung kommenden Monomere des Schalenanteils "weiche" Monomere dar.

Aufgabe und Lösung

Die Möglichkeit durch Mischen **verträglicher** Polymerer zu Blends mit verbesserten Eigenschaften, insbesondere verbesserten mechanischen und optischen Eigenschaften, verbesserter Verarbeitbarkeit und verbesserter Stabilität zu gelangen, besteht und hat auch schon zu einer Reihe kommerziell erfolgreicher Produkte geführt (vgl. H.F. Mark et al. Encyclopedia of Polymer Science & Engineering 2nd Ed., Vol. 12, pg. 399 - 461, J. Wiley & Sons, New York 1988).
Weniger erfolgreich waren bislang die Bemühungen geblieben, die erkannte Mischbarkeit zwischen PMMA und PEMA als Vertretern der Acrylat-Kunststoffe einerseits und PVDF andererseits zur Herstellung technisch fortschrittlicher Produkte auszunutzen.
Insbesondere bestand die Aufgabe, das relativ teure PVDF durch Abmischung mit einer preisgünstigeren Polymerkomponente partiell zu substituieren wenn möglich ohne Beeinträchtigung der günstigen Eigenschaften, die dem PVDF zukommen.

Es wurde nun gefunden, daß Kunststoffe mit sehr guten Gebrauchseigenschaften resultieren, wenn man

das PVDF mit solchen Polyvinylestern und Polyvinylacrylaten abmischt, die einerseits zumindest teilweise auf ein chemisch vernetztes Elastomeres gepfropft sind und andererseits eine Glastemperatur < 50 Grad C aufweisen. Besonderes Interesse finden solche Mischungen, die Elastomere enthalten, die deutlich geringere Verträglichkeit mit dem PVDF aufweisen als die auf dieses Elastomere gepfropften Polyvinylester und Polyvinylacrylate.

Erfindungsgemäß werden so thermoplastisch verarbeitbare Polymermischungen gewonnen, die auch bei geringen Anteilen an PVDF - z.B. im Bereich 5 - 20 Gew.-% - nahezu das gesamte PVDF in kristalliner Form enthalten. Es gibt sogar Anzeichen dafür, daß in diesen "Blends" der kristalline Anteil des PVDF am gesamten, in der Mischung vorhandenen PVDF gegenüber reinem PVDF eher angestiegen ist. Die Bestimmung des Kristallisationsgrades kann durch "Differential Scanning Calorimetry" (DSC, vgl. H.F. Mark et al. Encyclopedia of Polymer Science & Engineering 2nd Ed. Vol. 4, 488, J. Wiley & Sons 1986) erfolgen. Die erfindungsgemäßen Polymermischungen zeichnen sich durch hohe mechanische Festigkeit und sehr gute Lösungsmittelbeständigkeit aus.

Technisch besonders interessante Eigenschaften werden erreicht, wenn die auf das Elastomere gepfropften Polymeren Polymethylacrylat bzw. Polyethylacrylat darstellen und die Zähphase (d.h. das Elastomere) auf das in der Abmischung enthaltene Polymethylacrylat bzw. Polyethylacrylat wenigstens teilweise gepfropft ist, mit PVDF völlig unverträglich ist.

Die Erfindung betrifft daher thermoplastisch verarbeitbare Kunststoffmischungen KM mit ausgezeichneter Lösemittelbeständigkeit, die aufgebaut sind aus

A) 2 - 98 Gew.-%, vorzugsweise 4 - 50 Gew.-% eines Polymeren, das zu mindestens 80 Gew.-% aus den Monomeren der Formel $CH_2 = CF_2$ gebildet wird, und

B) 98 - 2 Gew.-% vorzugsweise 96 - 50 Gew.-% eines Polymeren, das zu

α) 20 - 90 Gew.-% aus einem Monomeren der Formel I

$$CH_2 = \overset{H}{C} - X - R \qquad (I)$$

worin R für einen Alkylrest mit 1 bis 3 Kohlenstoffatomen und X für einen Rest

$$- O - \overset{O}{C} -$$

oder

$$- \overset{O}{C} - O -$$

steht, und zu

β) 80 - 10 Gew.-% aus einem chemisch vernetzten Polymeren KP mit einer Glastemperatur Tg kleiner 0 Grad C, vorzugsweise kleiner -10 Grad C das wenigstens mit 5 Gew.-% des aus den Monomeren der Formel (I) gebildeten Polymerisats kovalent verbunden, vorzugsweise gepfropft ist, besteht.

Nach vorliegenden Erkenntnissen werden besonders günstige Eigenschaften erzielt, wenn in den Kunststoffmischungen KM als Polymerkomponente A) ein typisches handelsübliches PVDF eingesetzt wird und wenn insbesondere als Komponente B) Polymerisate mit Kern-Schale-Aufbau, insbesondere in Emulsionspolymerisation hergestellte Kern-Schale-Polymerisate angewendet werden.

Als Kernmaterial KP mit einer Glastemperatur < 0 Grad C, vorzugsweise < -10 Grad C, kommen an sich bekannte Elastomere (Latices) in Frage (Ullmanns Encyclopädie der Technischen Chemie, 4. Auflage, Bd. 13, 595 - 635, Verlag Chemie), vornehmlich ausgewählt aus der Gruppe der Polyacrylate, Polysiloxane, Polyolefine, insbesondere Polybutadiene, Polyisoprene, Ethylen-Propylen-Elastomere (EPM, EPDM, EPTM).

Vorzugsweise handelt es sich bei den Monomeren der Formel I um Ethylacrylat, Methylacrylat, Propylacrylat, Isopropylacrylat und Vinylacetat sowie Vinylpropionat bzw. Mischungen derselben. In der Regel kann davon ausgegangen werden, daß die Pfropfkomponenten aus den Monomeren der Formel I mit PVDF verträglich sind, d.h. die Polymeren aus den Monomeren der Formel I sollen im Temperaturbereich oberhalb des Schmelzpunktes des PVDF bis > 200 Grad C, bevorzugt bis > 250 Grad C eine verträgliche Polymerschmelze bilden.

Die Komponente A)

Die Komponente A ist definitionsgemäß zu mindestens 80 und bis zu 100 Gew.-% aus dem Monomeren 1,1-Difluorethylen aufgebaut.

Die Polymerisation wird gewöhnlich als Emulsions- oder Suspensionspolymerisation in wäßrigem Milieu unter Peroxidkatalyse beispielsweise mit Di-tert-butylperoxid im Bereich 50 - 150 Grad C und bei Drucken um 25 - 150 bar vorgenommen. (Ullmanns Encyclopädie der Technischen Chemie, 4. Auflage, Bd. 19, 103 - 104, Verlag Chemie; H.F. Mark et al. Encyclopedia of Polymer Science and Technology, Vol. 14, 600 - 616, Wiley Interscience, K.U. Buhler, Spezialplaste, Akademie Verlag, Berlin 1978). Das Homopolymerisat PVDF ist ein hochkristalliner Kunststoff mit linearem Molekularaufbau. Die mittlere Molekularmasse liegt bei den marktgängigen Typen im Bereich 100 000 bis 300 000, der Schmelzpunkt in der Regel im Bereich 160 - 180 Grad C, insbesondere 168 - 172 Grad C. (DTA). Als Temperaturbereich der Anwendbarkeit gilt - 30 bis 150 Grad C. Als besonders gut gilt die Lösungsmittel-, Witterungs- und Strahlenbestandigkeit des PVDF. Im Handel befinden sich auch pulverförmige PVDF-Typen mit Korndurchmessern um 100 um. Vorteilhafterweise können auch handelsübliche PVDF-Dispersionen zum Abmischen eingesetzt werden. Schlecht kristallisierende Copolymere des Vinylidenfluorids sind daher weniger bevorzugt, dies gilt insbesondere für Copolymere aus Vinylidenfluorid und Hexafluoraceton.

Die Komponente B)

Bei einer vorteilhaften Ausführungsart bedient man sich bei der Herstellung der Komponente B) der Emulsionspolymerisation (vgl. Houben-Weyl, 4. Auflage, Bd. XIV/1, 133 - 194, Georg Thieme Verlag 1961; H.F. Mark et.al. Encyclopedia of Polymer Science and Engineering, 2nd Ed., Vol. 6, pp 1 - 51, J. Wiley 1986; H. Rauch-Puntigam, Th.Völker Acryl- und Methacrylverbindungen, Springer Verlag, Berlin 1967). Die Glastemperatur der aus den Monomeren gebildeten Homo- bzw. Copolymerisate ist bekannt bzw. läßt sich berechnen (vgl. Brandrup-Immergut, Polymer Handbook, 2nd. Ed., J.Wiley 1975;, Vieweg-Esser, Kunststoff-Handbuch, Band IX, pg. 333 - 340, Carl-Hanser Verlag 1975).
In einer bevorzugten Ausführungsform wird so verfahren, daß die Monomeren der Formel I auf ein mit der Komponente A unverträgliches Elastomeres B$\beta$) aufgepfropft wird. Besonderes Interesse verdient dabei die Emulsionspolymerisation, wobei in einem ersten Verfahrensschritt das Elastomerteilchen erzeugt wird und in einem zweiten Schritt das Polymere B$\alpha$) auf das Elastomere aufgepfropft wird.

Die Herstellung solcher Kern-Schale-Latices vom Acrylattyp als Komponente B) kann z.B. in Anlehnung an US-A 4 199 486, EP 0 065 069 bzw. US-A 4 710 525 und US-A 3 787 522, US-A 3 943 190, US-A 3 914 338, US-A 4 052 525, US-A 3 985 703 vorgenommen werden
Der Aufbau der Polymerisate B) aus einem Kernmaterial KP und dem Schalenmaterial auf Acrylatbasis wird in an sich bekannter Weise durch eine bestimmte Verfahrensweise erreicht:

Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um das Kernmaterial herum gelagert. Ein günstiges Verhältnis der Schalendicke zur Größe des Kerns wird erhalten, wenn sich das Gewicht des Kernmaterials zum Schalenmaterial wie 1 : 3 bis 3 : 1 verhält. Durch geeignete Wahl der Emulgiermittelmenge kann die Teilchengröße in dem Sinne beeinflußt werden, daß die Teilchen um so größer werden, je kleiner die Emulgiermittelmenge ist. Die Teilchendurchmesser können z.B. im Bereich von 0,05 bis 5 $\mu$m liegen.
Als Monomere für das Kernmaterial KP finden in diesem Falle vorzugsweise Butylacrylat und 2-Ethylhexylacrylat Anwendung. Vorteilhafterweise stellt man das Kernmaterial KP unter Anwendung an sich bekannter monomerer Vernetzer her, vorzugsweise in Anteilen von 0,1 bis 6 Gew.-%, vorzugsweise 0,2 bis 3 Gew.-% bezogen auf die das Kernmaterial bildenden Monomeren.
Als Vernetzer dienen wie üblich solche Verbindungen, die mindestens zwei vinylische Doppelbindungen im Molekül besitzen, beispielsweise die (Meth)Acrylsäureester mehrwertiger Alkohole wie z.B. Glykoldimethacrylat, Butandioldiacrylat, Triäthylenglykoldimethacrylat, Tetraäthylenglykoldiacrylat, Trimethylolpropantriacrylat Pentaerythrittetraacrylat u.a. mehr. Als Schalenmaterial bietet sich mit Vorteil Polymethylacrylat oder Polyethylacrylat an.

In der ersten Polymerisationsstufe, in der das Kernmaterial entsteht, werden 0,1 bis 1 Gewichtsprozent, bezogen auf die Wasserphase an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 40 und

100 Grad C mit Hilfe wasserlöslicher Radikalbildner, wie Kalium- oder Ammoniumpersulfat oder Wasserstoffperoxyd, ausgelöst. Vor Beginn der zweiten Polymerisationsstufe kann erneut Initiator zugesetzt werden, jedoch wird wenig oder gar kein zusätzliches Emulgiermittel in der zweiten Stufe verwendet.

Falls erwünscht, können die so erhaltenen, meist 30 bis 60 %-igen Dispersionen in ein trockenes Pulver überführt werden, indem man sie in an sich bekannter Weise durch Eintrocknen dünner Schichten in flachen Behältern oder auf Walzen oder vorzugsweise durch Sprühtrocknung bei Temperaturen zwischen 50 und 100 Grad C trocknet.

Vorteilhafterweise kann das Kernmaterial KP seinerseits wieder "gefüllt" sein.

Besonders interessante technische Eigenschaften stellt man bei einem Emulsionspolymerisat mit folgendem Aufbau fest.

Kern: Copolymerisat aus Butylacrylat,
Allylmethacrylat,
Trimethylolpropantriacrylat im Gewichtsverhältnis 98 : 1 : 1

Schale: Polymethacrylat 100 Gew.-%.

Eine geeignete Polymerisatkomponente B) erhält man auch unter Verwendung von Ethylen-Propylen-Elastomeren wie EPDM oder EPTM als Bestandteil Bβ).

Die erfindungsgemäß verwendbaren Ethylen-Propylen-Elastomere sind an sich bekannt. Vgl. Ullmans Encyclopädie der Techn. Chemie, 4. Auflage, Bd. 13, 619 - 620, Verlag Chemie 1977; H.F. Mark et al. Encyclopedia of Polymer Science and Engineering 2nd Ed. Vol. 6, 523 - 564. J. Wiley & Sons 1986. Im allgemeinen liegen dabei Ethylen und Propylen im molaren Verhältnis 5 : 1 bis 1 : 3 vor. Das Molekulargewicht liegt gewöhnlich im Bereich 200 000 bis 500 000. Die (Mit)verwendung weiterer α-Monoolefine im Bereich bis zu 16 Kohlenstoffatomen ist ebenfalls möglich. Weiter sind vorteilhaft zwischen 0,1 und 10 Mol.-% eines linearen Diens bzw. eines ungesättigten, verbrückten Ring-Kohlenwasserstoffs mit mindestens einer Kohlenstoff-Kohlenstoff-Doppelbindung copolymerisiert, beispielsweise ungesättigte Derivate des Bicyclo-(2,2,1)-heptans wie 5-Alkyliden-2-norbornen, Dicyclopentadien, Bicyclo-(2,2,1)-heptadien. Im allgemeinen liegt der Gehalt an Doppelbindungen im Bereich 3 bis 20 Dopopelbindungen, vorzugsweise bei 5 bis 12 Doppelbindungen auf 1000 C-Atome, EPDM-Elastomere sind z.B. Gegenstand der US-A 2 933 480, 3 211 709, 3 093 620, 3 093 621, 3 113 115 und 3 300 450.

Die Pfropfung der Ethylen-Propylen-Elastomeren kann auf verschiedene Weise erfolgen, beispielsweise in organ. Lösungsmitteln oder im Monomeren.

Im ersten Fall wird beispielsweise Ethylen-Propylen-Dien-Elastomer (EPDM) [zum Beispiel die Handelsprodukte ® EPSYN 55 (Produkt der Fa. Copolymer), oder ® Polysar 585] in einem geeigneten Lösungsmittel wie Toluol, Chlorbenzol, Butylacetat angewendet.

Man arbeitet vorzugsweise unter einem Schutzgas wie beispielsweise Stickstoff oder Kohlendioxid in den üblichen mit Rührern ausgestatteten Polymerisationsgefäßen. Als Initiatoren können die an sich bekannten, beispielsweise peroxidischen Initiatoren, wie z.B. Benzoylperoxid, tert.-Butylperoctoat, Di-tert-butylperoxid in Mengen von gewöhnlich ca. 0,01 bis 2 Gew.-% bezogen auf die Monomeren angewendet werden. Die Polymerisation wird meist durch Temperaturerhöhung, beispielsweise auf oberhalb 60 Grad C und bis zum Siedepunkt des Lösungsmittels in Gang gebracht und gewöhnlich auch bei erhöhter Temperatur durchgeführt. Vorteilhaft kann man Monomeren plus Initiator dem in der Vorlage befindlichen Elastomeren anteilweise zusetzen. Die Gesamtpolymerisationsdauer liegt in der Regel im Bereich mehrerer Stunden bzw. kann sich über mehr als einen Arbeitstag erstrecken. Lösungsmittel und unumgesetztes Monomer können vorteilhafterweise unter reduziertem Druck entfernt werden, besonders vorteilhaft mit Hilfe eines Leistritz-Extruders. Die Analyse der Pfropfanteile kann mittels der "Repräcipitations-Chromatograpie"-Technik vorgenommen werden (vgl. J. Ma, D. Pang & B. Huand, J. Polym. Sci. A, Polym. Chem. 24,
2853 - 2866 (1986); A. Gadkari & M.F. Farona, Polym. Bull 17, 299 - 306 (1987)).

Weiter kann in gewisser Analogie zu EPDM/EPTM auch sogenannter "Soluble Rubber" als Elastomer eingesetzt werden.

Ferner sind im Sinne der vorliegenden Erfindung als Elastomere Bβ) verwendbar:

Butylkautschuk (IIE, vgl. Ullmann loc.cit. Bd. 13, S. 621 - 623; H.F. Mark et al. Encyclopedia of Polymer Science and Engineering 2nd Ed. Vol. 8, 423 - 487, J. Wiley & Sons, 1987).

Polyisopren (IR, vgl. Ullmann, loc.cit. Bd. 13, S. 617 - 621, H.F. Mark et al. Encyclopedia of Polymer Science and Engineering, 2nd Ed. Vol. 8, 487 - 564, J. Wiley & Sons, 1987).

Polybutadien (BR , vgl. Ullmann loc.cit. Bd. 13, S. 602 - 605; H.F. Mark et al. Encyclopedia of Polymer Science and Engineering 2nd Ed. Vol. 2, 537 - 590, J. Wiley & Sons 198.).

Desweiteren sind durch Polykondensation hervorgegangene Elastomere wie Silikonkatuschuk (Q , vgl. Ullmann loc.cit. Bd. 13, 628 - 631); H.F. Mark et al. Encyclopedia of Polymer Science & Technology, Vol. 12, 464 - 569, J. Wiley Interscience) anwendbar.

Die Herstellung der Mischungen geschieht in an sich bekannter Weise, beispielsweise durch mechanisches Mischen, vorteilhafterweise bereits zerkleinerter Partikel oder unter Zerkleinerung im Verlauf des Mischvorgangs und Aufschmelzen des Gemisches. Vorteilhafterweise kann die Mischung im Extruder vorgenommen werden. (Vgl. deutsche Patentanmeldung P 37 43 199.4 vom 19.12.1987).

Beim mechanischen Mischen erzeugt man zunächst Mischungen der Komponenten, wobei man vorteilhaft von bereits partikelförmigen Substanzen ausgeht, üblicherweise unter Verwendung langsam laufender Mischaggregate wie z.B. Trommel-, Rhönrad-, oder Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. im Ein- oder Mehrschneckenextruder oder gegebenenfalls in Extrudern mit oszillierender Schnecke und Scherstiften (z.B. im BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 3 bis 5 mm. Eine andere vorteilhafte Ausführungsform stellt das Mischen von Dispersionen (Emulsionen) der Bestandteile und nachfolgende Entfernung der flüssigen Phase, beispielsweise durch Abquetschen im Extruder dar.

Vorteilhafte Wirkungen der Mischungen KM

Die vorteilhaften Wirkungen der Mischungen KM seien am Beispiel der Ausführungsart mit PVDF als Komponente A) und einem Kern-Schale-Polymerisat als Komponente B) (Bβ: Copolymerisat aus Butylacrylat, Allylacrylat und Trimethylolpropantriacrylat (98 : 1 : 1 Gew.-Teile, wie oben beschrieben) dargestellt, B : Polymethylacrylat bzw. Polyethylacrylat).

Eine solche Abmischung aus Kern-Schale-Polymerisat und PVDF zeigt auch bei geringem PVDF-Gehalt hohe Kristallinität des PVDF-Anteils. Dieser Umstand dürfte zumindest wesentlich zu der beobachteten Beständigkeit der Mischungen gegenüber Lösemitteln beitragen. So ist eine Abmischung aus 10 Gew.-% PVDF und 90 Gew.-% eines Emulsionspolymerisats der vorstehend angegebenen Zusammensetzung beständig gegenüber Toluol, Aceton, Chloroform und Ethylacetat.
Überraschenderweise ergibt sich bei Zusatz von nur 10 Gew.-% zum genannten Emulsionspolymerisat auch eine deutliche Verbesserung der Wärmeformbeständigkeit. Dies steht im Widerspruch zu Ergebnissen mit PVDF-PMMA-Abmischungen, bei denen bereits ein geringer PVDF-Zustand die Wärmeformbeständigkeit des PMMA deutlich herabsetzt.

Von besonderer Bedeutung für die anwendungstechnischen Eigenschaften der Kunststoffmischungen KM ist das ausgewogene Vorhandensein aller 3 Bestandteile der Kunststoffmischung KM

A) PVDF oder ein kristallines Vinylidenfluoridcopolymeres

Bα) ein mit PVDF verträgliches Vinylpolymeres mit einer Glastemperatur < 50 Grad C, bevorzugt < 30 Grad C, das zumindest teilweise auf eine mit PVDF unverträgliche dritte Polymerspecies

Bβ) gepfropft ist, wobei Bβ im Temperaturbereich -50 Grad C bis + 100 Grad C auch mit Bα unverträglich ist, chemisch vernetzt ist und eine Glastemperatur T < 0 Grad C aufweist.

Von besonderem Interesse sind solche Kunststoffmischungen KM, die 4 - 40 Gew.-% PVDF enthalten. Besonders bevorzugt sind Mischungen, die 5 - 30 Gew.-% PVDF enthalten. Dabei ist der Anteil der Komponente Bβ an der Komponente B bevorzugt im Bereich 40 - 90, ganz besonders bevorzugt im Bereich 55 - 75 Gew.-%.
Daneben finden auch solche KM Interesse, die aus 75 - 95 Gew.-% PVDF als Komponente A und 25 - 5 Gew.-% Komponente B bestehen, wobei auch hier ein Anteil von 55 - 75 Gew.-% der Komponente Bβ an B bevorzugt ist.

Die folgenden Beispiele dienen der Erläuterung der Erfindung:

Die Bestimmung der Schmelz-Viskosität ($\eta_s$) wird nach DIN 54 811 Verfahren B vorgenommen.

Der Teilchendurchmesser wird mit einem ® Coulter Nano-Sizer bestimmt. Desweiteren kann der Teilchendurchmesser auch mittels Lichtstreuung bestimmt werden.

Die Bestimmung der Reißdehnung und der Zugfestigkeit wird nach DIN 53 455 vorgenommen.

Die Shore-Härte wird nach DIN 53 505 bestimmt.

## BEISPIELE

### Beispiel 1

Herstellung eines Emulsionspolymerisates mit Kern-Schale-Struktur (Komponente B)

In einem Polymerisationsgefäß mit Rührer, Rückflußkühler und Thermometer werden

1,0 g Kaliumperoxodisulfat als Initiator und
0,06g Triisobutylphenol, ethoxyliert mit 7 Mol Ethylenoxid, sulfatiert, Natriumsalz als Emulgator in
630,0 g destilliertem Wasser vorgelegt und auf 80 Grad C erwärmt.

In diese Vorlage dosiert man gleichmäßig unter Rühren innerhalb von 2 1/2 Stunden eine Emulsion I bestehend aus:

1631,0 g Butylacrylat,
16,6 g Allylmethacrylat
16,6 g Propantrimethyloltriacrylat,
3,0 g Kaliumperoxodisulfat
5,0 g des oben genannten Emulgators und
1877,0 g destilliertem Wasser

(Zur Analyse wird eine Probe entnommen: die so hergestellte Polymerdispersion hat einen Teilchendurchmesser von 346 nm).

Direkt im Anschluß an Emulsion I wird eine Emulsion II in 1 1/2 Stunden bei 80 Grad C zudosiert, bestehend aus:

900,0 g Methylacrylat
2,0 g Kaliumperoxodisulfat
1,5 g des oben genannten Emulgators
1345,0 g destilliertem Wasser.

Nach Abkühlen auf Raumtemperatur resultiert eine Polymerdispersion mit einem Feststoffgehalt von 39,8 %. Teilchendurchmesser: 386 nm.

Zur Gewinnung des Polymerisatfeststoffes wird die Dispersion 48 Stunden bis -16 Grad C eingefroren. Nach dem Auftauen wird der Feststoff abgetrennt, dreimal mit Wasser gewaschen und im Vacuum bei 50 Grad C getrocknet.

### Beispiel 2

Man verfährt wie in Beispiel 1, wählt jedoch eine andere Zusammensetzung der Emulsion I:

1648,0 g Butylacrylat
8,3 g Allylmethacrylat
8,3 g Trimethylolpropantriacrylat
1,6 g Kaliumperoxodisulfat,
5,0 g des in Beispiel 1 genannten Emulgators,
1877,0 g destilliertes Wasser.

Ergebnis:
Durchmesser der Polymerdispersion nach Zugabe der Emulsion II: 446 nm.
Feststoffgehalt der Dispersion: 40 Gew.-%
Aufarbeitung zur Gewinnung des Polymerisatfeststoffes gemäß Beispiel 1.

### Beispiel 3

Man verfährt wie in Beispiel 2, wählt jedoch eine andere Zusammensetzung der Monomeren in Emulsion I:

1597,0 g Butylacrylat
33,3 g Allylmethacrylat
33,3 g Trimethylolpropantriacrylat.

Nach Zugabe der Emulsion II erhält man eine Polymerdispersion mit einem Teilchendurchmesser von 448 nm.

Beispiel 4

Herstellung und Charakterisierung der Kunststoffmischungen KM.

Komponente A: PVDF
Komponente B: Emulsionspolymerisat mit Kern-Schale-Aufbau
Komponente Bβ: Polybutylacrylat vernetzt mit 1 % Allylmethacrylat und 1 % Trimethylolpropantriacrylat.
Komponente Bα: Polymethylacrylat, teilweise gepfropft auf Bβ.

PVDF (® Solef 1010 von Fa. Solvay) wird in unterschiedlichen Anteilen mit dem Polymerisatfeststoff gemäß Beispiel 1 auf dem Extruder gemischt (siehe Tabelle 1).
Tabelle 1 enthält neben dem Gehalt der KM an PVDF jeweils die niedrigste mit der DSC erfassbare Glastemperatur sowie den Schmelzpeak ($T_{max}$) des in der Mischung erhaltenen PVDF, die Schmelzwärme/g sowie die Schmelzwärme/g PVDF.

Tabelle 1

Charakterisierung der KM aus PVDF und Polymeres gemäß Beispiel 1

| No. | Anteil PVDF an KM (Gew.-%) | Tg (Elastomer) (Grad C) | $T_{max}$ Grad C | Schmelzwärme J/g KM | J/g PVDF |
|---|---|---|---|---|---|
| 4-a | 100 | (-40) | 192 | 57,0 | 57,0 |
| 4-b | 80 | -43 | 181 | 36,0 | 46,0 |
| 4-c | 50 | -45 | 176 | 33,4 | 66,9 |
| 4-d | 20 | -46 | 170 | 13,8 | 68,9 |
| 4-e | 10 | -43 | 163 | 6,4 | 64,3 |
| 4-f | 5 | -44 | 155 | 2,4 | 47,0 |
| 4-g | - | -40 | - | - | - |

Wie zu erkennen ist, ist die Schmelzwärme/g PVDF auch in Abmischungen mit nur 10 - 20 % PVDF etwa gleich groß, wenn nicht größer als im PVDF selbst, d.h. der PVDF liegt in der KM weitgehend kristallin vor.

Die KM 4 - b bis 4 - f lassen sich ausgezeichnet thermoplastisch verarbeiten.
4 - d (20 Gew.-% PVDF) zeigt bei 180 Grad C eine $\eta_s$ von 1925 Pa s. Auch dieses Material läßt sich zu einen glatten, nicht gewellten, blasenfreien Strang extrudieren.

An den Strängen werden Zugfestigkeit und Reißdehnung gemessen:

| | Probe 4-d | Probe 4-e |
|---|---|---|
| Zugfestigkeit MPa | 5,2 | 3,1 |
| Reißdehnung (%) | 200 | 180 |

Aus den KM 4-d und 4-e wurden Prüfplättchen gespritzt. Man erhält Plättchen mit guter Lösungsmittelbständigkeit (insbesondere Probe 4-d) gegen Toluol und Aceton.
Shorehärte A der Proben: 4-d : 71
4-e : 59

Beispie 5a,b

KM mit einem hohen Gehalt an PVDF

(80) 90 Gew.-% PVDF (®Solef 1010 von Fa. Solvay) werden mit (20) 10 Gew.-% des Polymerisatfeststoffes gemäß Beispiel 2 gemischt, granuliert und anschließend zu Prüfkörpern gespritzt.

Probe 5a, 90 Gew.-% PVDF:
VST (Grad C): 130
Schlagzähigkeit (Normkleinstab): ohne Bruch
Kerbschlagzähigkeit (Normkleinstab): 28,9 KJ/m² S

Probe 5b, 80 Gew.-% PVDF:
VST (Grad C): 100
Schlagzähigkeit (Normkleinstab): ohne Bruch
Kerbschlagzähigkeit (Normkleinstab): 39,7 KJ/m² T

## Patentansprüche

1. Thermoplastisch verarbeitbare Kunststoffmischungen mit hoher Lösemittelbeständigkeit unter Verwendung von Polymerisaten des Vinylidenfluorids,
   dadurch gekennzeichnet,
   daß die Kunststoffmischungen KM aufgebaut sind aus
   A) 2 - 98 Gew.-% eines Polymeren, das zu mindestens 80 Gew.-% aus den Monomeren der Formel $CH_2 = CF_2$ gebildet wird, und
   B) 98 - 2 Gew.-% eines Polymeren, das zu 20 - 90 Gew.-% aus einem Monomeren der Formel I

   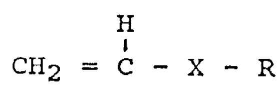 (I)

   worin R für einen Alkylrest mit 1 bis 3 Kohlenstoffatomen und X für einen Rest

   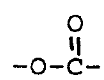

   oder

   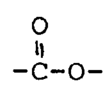

   steht oder aus Mischungen der Monomeren der Formel I, und zu 80 - 10 Gew.-% aus einem chemisch vernetzten Polymeren KP mit einer Glastemperatur Tg kleiner 0 Grad C, das wenigstens mit 5 Gew.-% des aus den Monomeren der Formel (I) gebildeten Polymerisats kovalent verbunden ist, besteht.

2. Thermoplastisch verarbeitbare Kunststoffmischungen KM gemäß Anspruch 1, dadurch gekennzeichnet, daß das Polymere KP ausgewählt ist aus der Gruppe der elastomeren Polyacrylate, Polysiloxane, Polyolefine.

3. Thermoplastisch verarbeitbare Kunststoffmischungen KM, gemäß Anspruch 1, dadurch gekennzeichnet, daß als Komponente B) Polymerisate mit Kern-Schalen-Aufbau eingesetzt werden.

4. Thermoplastisch verarbeitbare Kunststoffmischungen KM gemäß den Ansprüchen 1 bis 3, dadurch gekennzeichnet, daß als Monomeren der Formel I Ethylacrylat, Methylacrylat, Propylacrylat, Isopropylacrylat, Vinylacetat oder Vinylpropionat verwendet werden.

5. Thermoplastisch verarbeitbare Kunststoffmischungen KM gemäß Anspruch 1, dadurch gekennzeichnet, daß die Komponente B) durch Emulsionspolymerisation hergestellt worden ist.

## Claims

1. Thermoplastically workable plastics mixtures with a high resistance against solvents, using polymers of vinylidene fluoride-, characterised in that the plastics mixtures KM are synthesised from
   A) 2 - 98 wt.% of a polymer formed, in an amount of at least 80 wt.%, of monomers of the Formula $CH_2 = CF_2$,
   B) 98 - 2 wt.% of a polymer which consists, in an amount of 20 - 90 wt.%, of a monomer of Formula I

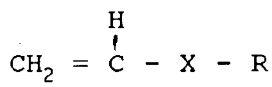 (I)

   wherein R represents an alkyl group having 1 to 3 carbon atoms and X represents a group

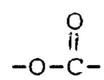

   or

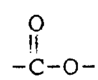

   or of mixtures of monomers of Formula I and,
   in an amount of 80 - 10 wt.%, of a chemically cross-linked polymer KP with a glass transition temperature Tg below 0°C, which is covalently bound with at least 5 wt.% of the polymer formed from the monomers of Formula (I).

2. Thermoplastically workable plastics mixtures KM according to Claim 1, characterised in that the polymer KP is selected from the group of elastomeric polyacrylates, polysiloxanes, polyolefins.

3. Thermoplastically workable plastics mixtures KM according to Claim 1, characterised in that polymers with a structure consisting of a core and shells are used as component B).

4. Thermoplastically workable plastics mixtures KM according to Claims 1 to 3, characterised in that ethyl acrylate, methyl acrylate, propyl acrylate, isopropyl acrylate, vinyl acetate or vinyl propionate are used as monomers of Formula I.

5. Thermoplastically workable plastics mixtures KM according to Claim 1, characterised in that the component B) is produced by emulsion polymerisation.

## Revendications

1. Mélanges de matières plastiques, transformables thermoplastiquement et ayant une résistance élevée aux solvants, préparés avec utilisation de polymères du fluorure de vinylidène, caractérisés en ce que ces mélanges de matières plastiques KM sont composés de
   A) 2 - 98% en poids d'un polymère qui est formé, pour 80% en poids au moins, du monomère de formule $CH_2 = CF_2$, et
   B) 98 - 2% en poids d'un polymère qui se compose, pour 20 à 90% en poids, d'un monomère de formule I

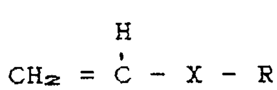 (I)

   dans laquelle R est mis pour un reste alkyle à 1-3 atomes de carbone et X est mis pour un reste

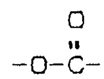 ou 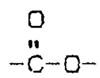 ,

ou de mélanges des monomères de formule I,
et, pour 80 à 10% en poids, d'un polymère chimiquement réticulé KP, ayant une température de transition vitreuse Tg inférieure à 0°C, qui est uni par liaison covalente à 5% en poids au moins du polymère formé des monomères de formule (I).

2. Mélanges de matières plastiques KM transformables thermoplastiquement selon la revendication 1, caractérisés en ce que le polymère KP est choisi dans le groupe des polyacrylates, des polysiloxanes et des polyoléfines élastomères.

3. Mélanges de matières plastiques KM transformables thermoplastiquement selon la revendication 1, caractérisés en ce qu'on utilise, comme composant B), des polymères à structure en noyau-coquille.

4. Mélanges de matières plastique KM transformables thermoplastiquement selon l'une quelconque des revendications 1 à 3, caractérisés en ce qu'on utilise, comme monomère de formule I, de l'acrylate d'éthyle, de l'acrylate de méthyle, de l'acrylate de propyle, de l'acrylate d'isopropyle, de l'acétate de vinyle ou du propionate de vinyle.

5. Mélanges de matières plastiques KM transformables thermoplastiquement selon la revendication 1, caractérisés en ce que le composant B) a été préparé par polymérisation en émulsion.